# EUROPÄISCHE PATENTSCHRIFT

(11) **EP 4 098 429 B1**
(45) Veröffentlichungstag und Bekanntmachung des Hinweises auf die Patenterteilung: **28.02.2024**
(21) Anmeldenummer: 21208908.0
(22) Anmeldetag: 18.11.2021
(51) Int. Cl.: B29D 30/54, B29D 30/56, B29D 30/00

(54) **VERFAHREN ZUR VORBEREITUNG VON REIFENKOMPONENTEN FÜR DEN EINSATZ IN DER KALTEN RUNDERNEUERUNG VON REIFEN**
METHOD OF PREPARATION OF TYRE COMPONENTS FOR USE IN COLD RETREADING OF TYRES
PROCÉDÉ DE PRÉPARATION DE COMPOSANTS DE PNEU POUR L'UTILISATION LORS DU RECHAPAGE À FROID DES PNEUS

(30) Priorität: 04.06.2021 DE 102021205672
(43) Veröffentlichungstag der Anmeldung: 07.12.2022
(73) Patentinhaber: Continental Reifen Deutschland GmbH, 30165 Hannover (DE)
(72) Erfinder: Rudolph, Marco, 30165 Hannover (DE)
(74) Vertreter: Continental Corporation

(56) Entgegenhaltungen:
- EP-A2- 1 125 964
- WO-A1-2013/086577
- WO-A1-2015/095103

## Beschreibung

Die Erfindung betrifft ein Verfahren zur Vorbereitung von Reifenkomponenten, insbesondere von Laufstreifen, für den Einsatz in der kalten Runderneuerung von Reifen, ein Verfahren zur kalten Runderneuerung eines Reifens und eine Vorrichtung zur Vorbereitung von Reifenkomponenten für den Einsatz in der kalten Runderneuerung von Reifen. Offenbart wird zudem die Verwendung eines ionisierten Gases bei der Reinigung der aufgerauten Oberfläche einer Reifenkomponente.

Der Gegenstand der Erfindung ist in den beigefügten Ansprüchen definiert.

Die Herstellung von modernen Fahrzeugreifen ist ein aufwendiges und relativ kostenintensives Verfahren, bei dem regelmäßig erhebliche Mengen an wertvollen Rohstoffen eingesetzt werden müssen. Aus diesem Grund wurden Verfahren zur Runderneuerung von Altreifen entwickelt, mit denen es möglich ist, große Teile von Altreifen wiederzuverwerten. Die bekannten Verfahren zur Runderneuerung basieren im Wesentlichen darauf, dass der alte, zumeist verschlissene Laufstreifen abgetragen wird, sodass ein neuer Laufstreifen auf die unterliegende Karkassenoberfläche aufgebracht werden kann.

Unter den Verfahren zur Runderneuerung kommt insbesondere der sogenannten kalten Runderneuerung ("cold retread") eine besondere Bedeutung zu. In diesem Verfahren wird der alte Laufstreifen des Altreifens von der Karkasse ("casing") abgetragen, beispielsweise durch Schleifen. Dadurch bleibt ein Altreifen zurück, dessen mit Gummi belegte Karkassenoberfläche aufgeraut ist. Kennzeichnend für die kalte Runderneuerung ist, dass die neuen Laufstreifen hierbei vorvulkanisiert ("pre-cured") werden, sodass sie im kalten Runderneuerungsprozess, wie er beispielsweise in Kaltrunderneuerungswerken (sogenannten "retread shops") durchgeführt wird, auf die Casings aufgebracht werden können. Die belastbare Verbindung zwischen dem Altreifen und dem neuen Laufstreifen wird durch ein geeignetes Haftmittel gewährleistet, welches eine stoffschlüssige Verbindung zwischen den beiden Komponenten erzeugt. Dies erfolgt beispielsweise durch eine Vulkanisation eines schwefelhärtbaren Haftmittels, beispielsweise einer Kautschukmischung. Eine diesbezügliche Offenbarung findet sich beispielsweise in der EP 1125964 A2, wobei in diesem Dokument eine der zu verbindenden Oberflächen vor dem Verbinden mit einem Plasma behandelt wird.

Damit das Haftmittel eine langfristige und feste Verbindung zwischen den Reifenkomponenten schaffen kann, ist sowohl auf der freigelegten Karkassenoberfläche als auch auf der Rückseite der vorvulkanisierten Laufstreifen eine spezifisch eingestellte Rauheit nötig, wobei insbesondere die Rauheit des Laufstreifens für eine haltbare Verbindung als besonders wichtig angesehen wird. Wird die spezifische Rauheit nicht eingestellt, kann sich der Laufstreifen bei Verwendung des runderneuerten Reifens lösen, was unbedingt vermieden werden muss.

Aus diesem Grund werden die Oberfläche des weitgehend vom alten Laufstreifen befreiten Altreifens sowie die Oberfläche des auszubringenden neuen Laufstreifens im Stand der Technik mit materialabtragenden Verfahren aufgeraut. In der Praxis erfolgt die Bestimmung der nötigen Rauheit dabei zumeist mittels einer visuellen Sichtprüfung unter Zuhilfenahme von standardisierten Rauheitsproben, mit denen die erzeugten Oberflächentexturen vordefinierten Klassen zugeordnet werden können.

Neben einer optimalen Oberflächenrauheit ist es bei dieser Vorbereitung der Reifenkomponenten für die Qualität des runderneuerten Reifens wichtig, dass die bearbeiteten Oberflächen eine hinreichende Reinheit aufweisen, d. h. möglichst frei von den abgetragenen Materialpartikeln sind, die sich anderenfalls in der geschaffenen rauen Oberfläche festsetzen und beim Verbinden des Laufstreifens mit dem Casing zu ungewollten Schwachstellen im Verbund führen können. Zudem können abgetragene Materialpartikel auf der Oberfläche die Bestimmung der Oberflächenbeschaffenheit erschweren und zu Fehlbewertungen führen.

Im Stand der Technik erfolgt die Reinigung der bearbeiteten Oberflächen zumeist händisch, beispielsweise durch das mechanische Abfegen der Oberfläche oder durch den Einsatz einer Luftdruckpistole, mit der versucht wird, das abgetragene Material vom Laufstreifen zu entfernen. Beispiele für eine Entfernung mittels Druckluft finden sich beispielsweise in der WO 2015/095103 A1 oder der WO 2013/086577 A1.

Eine besondere Herausforderung bei diesem Arbeitsschritt entsteht dabei durch das Material der bearbeiteten Oberfläche, welche nämlich sowohl beim Laufstreifen als auch beim Altreifen im Wesentlichen aus einer zumindest teilweise vulkanisierten Kautschukmischung, d. h. einem Gummi, besteht, sodass auch das abgetragene Material vor allem aus Gummi besteht. Die Entfernung von kleinen Gummipartikeln von einer rauen Gummioberfläche erweist sich dabei in der Praxis als besonders herausfordernd, so dass sich zahlreiche herkömmliche Reinigungsverfahren als für den Zweck ungeeignet erwiesen haben.

Die Prüfung, ob die händische Reinigung der bearbeiteten Oberfläche ausreichend war, erfolgt im Stand der Technik zumeist durch eine Sichtprüfung. Sowohl die händische Reinigung als auch die Sichtprüfung erfordern somit erheblichen Einsatz an Arbeitskräften und insbesondere auch speziell geschultes Personal, welches die Oberflächenbeschaffenheit des hergestellten Produktes und die notwendige Reinheit der Oberfläche zuverlässig bewerten und einschätzen kann.

Das aus dem Stand der Technik bekannte Verfahren zur Vorbereitung von Reifenkomponenten, insbesondere von Laufstreifen, für den Einsatz in der kalten Runderneuerung von Reifen wird regelmäßig als fehleranfällig empfunden, sodass verbleibender Schmutz eine Verbindung mit dem aufgebrachten Haftmittel eingehen kann, was zur Bildung von klebrigen Klumpen führen kann, die den Prozess stören können.

Der von der Reifenkomponente entfernte Schmutz kann bei der Entfernung mittels Fegen oder mittels eines Gebläses in die Umwelt gelangen und dort beispielsweise die zur Bearbeitung der Reifenkomponenten verwendeten Werkzeuge verschmutzen. Dies hat sich als besonders nachteilig in solchen Fällen erwiesen, in denen die Werkzeuge zur materialabtragenden Bearbeitung hochpräzise optische Werkzeuge umfassen, wie beispielsweise einen Laser. Zudem kommt es bei diesen Verfahren regelmäßig zu einer starken Verschmutzung der Arbeitsstätten, wodurch hohe Reinigungskosten entstehen können.

Bedingt durch stetig steigende Standards für die Arbeitsplatzsicherheit hat es sich bei den aus dem Stand der Technik bekannten Verfahren zudem als nachteilig erwiesen, dass das in die Umwelt freigesetzte abgetragene Material, welches zumeist eine kleine Partikelgröße aufweist, eine Belastung für die mit dem Verfahren befassten Arbeiter darstellen kann.

Es war die primäre Aufgabe der vorliegenden Erfindung, die aus dem Stand der Technik bekannten Nachteile auszuräumen oder zumindest zu verringern.

Insbesondere war es die Aufgabe, ein Verfahren zur Vorbereitung von Reifenkomponenten, insbesondere von Laufstreifen, für den Einsatz in der kalten Runderneuerung von Reifen anzugeben, mit welchem raue Oberflächen erhalten werden können, die über eine besonders hohe Reinheit verfügen, d. h. nur im geringen Maße mit abgetragenem Material bedeckt sind und somit eine besonders zuverlässige und langanhaltende Verbindung im runderneuerten Reifen ermöglichen.

Eine zentrale Aufgabe der vorliegenden Erfindung war es somit, in einem Verfahren zur Vorbereitung von Reifenkomponenten für den Einsatz in der kalten Runderneuerung von Reifen die Reinigungsleistung zu optimieren und spezifisch auf die Eigenschaft der bearbeiteten Materialien, insbesondere vulkanisierte Kautschukmischungen, abzustimmen.

Es war hierbei wünschenswert, verschiedene Maßnahmen vorzusehen, die in vorteilhaften Ausgestaltungen flexibel miteinander kombiniert werden können, um eine bestmögliche Reinigung der Oberfläche von bearbeiteten Reifenkomponenten zu ermöglichen.

Eine weitere Aufgabe der vorliegenden Erfindung bestand darin, ein Verfahren zur Vorbereitung von Reifenkomponenten für den Einsatz der kalten Runderneuerung von Reifen anzugeben, bei dem die Reinigung der Oberfläche weitgehend automatisiert werden kann, sodass saubere Oberflächen mit einer spezifischen Beschaffenheit in reproduzierbarer Weise erhalten werden können und die Fehleranfälligkeit sinkt.

Es war eine ergänzende Aufgabe der vorliegenden Erfindung, dass das erfindungsgemäße Verfahren so ausgeführt werden kann, dass die Freisetzung von abgetragenem Material in die Umwelt, insbesondere die Belastung von mit dem Verfahren befassten Arbeitern, minimiert wird.

Es war eine ergänzende Maßgabe, dass das anzugebende Verfahren idealerweise in gleichem Maße für Laufstreifen und die zumindest teilweise vom alten Laufstreifen befreiten Karkassenoberflächen von Altreifen einsetzbar sein sollte.

Es war eine Aufgabe der vorliegenden Erfindung, ein Verfahren zur Vorbereitung von Reifenkomponenten für den Einsatz in der kalten Runderneuerung von Reifen anzugeben, dessen Reinigungsschritt so geführt wird, dass die zur materialabtragenden Bearbeitung einsetzten Werkzeuge längere Standzeiten aufweisen und in ihrer Effizienz nicht durch das abgetragene Material reduziert werden. Das anzugebende Verfahren sollte dabei wünschenswerterweise für eine breite Palette an Reifenkomponenten sowie für die in der Reifenindustrie üblichen Gummimaterialien einsetzbar sein.

Zudem sollte mit dem anzugebenden Verfahren wünschenswerterweise das Risiko minimiert werden, makroskopische Unebenheiten zu erzeugen bzw. das Verfahren sollte in bestimmten Ausgestaltungen zumindest in der Lage sein, entsprechende makroskopische Unebenheiten zu detektieren, um durch entsprechende Unebenheiten erzeugten Defektstellen im runderneuerten Reifen zu vermeiden.

Das anzugebende Verfahren sollte zudem idealerweise mit herkömmlichen Betriebsmitteln betreibbar sein und insbesondere ohne den Einsatz von gesundheitsschädlichen Chemikalien auskommen. Somit sollte das anzugebende Verfahren wünschenswerterweise ein hohes Maß an Arbeitssicherheit ermöglichen.

Es war eine ergänzende Vorgabe der vorliegenden Erfindung, dass das anzugebende Verfahren mit hohen Durchsätzen betreibbar sein sollte und auch große Mengen an Reifenkomponenten für den Einsatz in der kalten Runderneuerung vorbereiten können sollte.

Im Lichte der vorstehenden Ausführungen war es zudem eine Aufgabe, ein Verfahren zur kalten Runderneuerung eines Reifens anzugeben, in welchem die Vorbereitung zumindest einer Reifenkomponente mit dem erfindungsgemäßen Verfahren erfolgt.

Gleichfalls war es eine Aufgabe der vorliegenden Erfindung, eine Vorrichtung zur Vorbereitung von Reifenkomponenten für den Einsatz in der kalten Runderneuerung von Reifen anzugeben, welche insbesondere für den Einsatz im erfindungsgemäßen Verfahren geeignet ist.

Abschließend war es eine Aufgabe der vorliegenden Erfindung, eine Verwendung für ionisiertes Gas bei der Reinigung von Reifenkomponenten anzugeben.

Die vorstehend genannten Aufgaben werden durch Verfahren, Vorrichtungen und Verwendungen gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Verfahren, Vorrichtungen und Verwendungen, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter erfindungsgemäßer Vorrichtungen und Verwendungen ergeben sich aus den Merkmalen bevorzugter Verfahren.

Die Erfindung betrifft ein Verfahren zur Vorbereitung von Reifenkomponenten, insbesondere von Laufstreifen, für den Einsatz in der kalten Runderneuerung von Reifen, umfassend die folgenden Verfahrensschritte:
a) Herstellen oder Bereitstellen einer Reifenkomponente, umfassend eine zumindest teilweise vulkanisierte Kautschukmischung,
b) Aufrauen einer Oberfläche der Reifenkomponente durch Abtragen von Material mit einem oder mehreren Werkzeugen, und
c) Entfernen des abgetragenen Materials von der aufgerauten Oberfläche der Reifenkomponente,
dadurch gekennzeichnet, dass das Entfernen des abgetragenen Materials in Schritt c) zumindest einen der folgenden Schritte umfasst:
c1) Beaufschlagen der aufgerauten Oberfläche mit einem Gasstrom und Absaugen des mit abgetragenen Material angereicherten Gases mit einer Absaugeinheit, wobei der Gasstrom ein rotierender Gasstrom in der Form eines Wirbels ist,
   und/oder
c2) Beaufschlagen der aufgerauten Oberfläche mit einem ionisierten Gas, so dass das abgetragene Material elektrostatisch aufgeladen wird, wobei das Entfernen des abgetragenen Materials in Schritt c2) durch ein angelegtes elektrisches Feld bedingt oder unterstützt wird, um das elektrostatisch aufgeladene, abgetragene Material zumindest teilweise von der Oberfläche abzuheben.

In dem erfindungsgemäßen Verfahren kann die zu bearbeitende Reifenkomponente, bei der es sich beispielsweise um einen Laufstreifen oder um einen zumindest teilweise von dem alten Laufstreifen befreiten Altreifen handeln kann, hergestellt oder bereitgestellt werden. Das Bereitstellen kann beispielsweise durch das Einkaufen der entsprechenden Komponente von einem Zulieferer erfolgen. Das Herstellen erfolgt hingegen beispielsweise durch das Abtragen eines alten Laufstreifens von einem Altreifen oder durch das Herstellen eines vorprofilierten Laufstreifens durch Vulkanisation.

Im Sinne der vorliegenden Erfindung kann es bei der Reifenkomponente jedoch auch um einen Altreifen handeln, dessen alter Laufstreifen erst im Zuge des erfindungsgemäßen Verfahrens durch die Werkzeuge entfernt wird.

Erfindungsgemäß umfasst die Reifenkomponente eine zumindest teilweise vulkanisierte Kautschukmischung. In Übereinstimmung mit dem fachmännischen Verständnis ist dies nicht nur für Altreifen der Fall, sondern auch für die in der kalten Runderneuerung eingesetzten Laufstreifen. Es hat sich als Vorteil des erfindungsgemäßen Verfahrens erwiesen, dass die in den Reifenkomponenten enthaltene Kautschukmischung nicht vollständig vulkanisiert sein muss, auch wenn dies für die meisten Anwendungen als vorteilhaft angesehen werden kann. Dadurch ist es auch nicht nötig, bei der Reifenkomponente zu untersuchen, ob diese bereits vollständig vulkanisiert ist, was angesichts der komplexen Materialstruktur von vulkanisierten Kautschukmischungen ggf. schwierig sein kann.

In Schritt b) erfolgt das Aufrauen einer Oberfläche der Reifenkomponente, d. h. zumindest einer Oberfläche der Reifenkomponente. Dies erfolgt durch Abtragen von Material mit einem oder mehreren Werkzeugen in einem materialabtragenden Verfahren. Anschließend wird das so abgetragene Material in Schritt c) von der aufgerauten Oberfläche der Reifenkomponente entfernt. In dem erfindungsgemäßen Verfahren erfolgt dieses Entfernen jedoch nicht beliebig, sondern umfasst spezifische Arbeitsschritte, nämlich zumindest einen der Schritte c1) und/oder c2). Dies bedeutet, dass die erzeugte aufgeraute Oberfläche in Schritt c1) mit einem Gasstrom, d. h. dem durch eine Druckdifferenz erzeugten Strom eines Gases, beaufschlagt wird, um das in Schritt b) abgetragene Material aufzuwirbeln. Zusätzlich wird jedoch das mit den aufgewirbelten abgetragenen Material angereicherte Gas mit einer Absaugeinheit abgesaugt. Hierdurch ist es durch gezielte Entfernung des abgetragenen Materials aus dem Arbeitsbereich möglich, die Reinigungsleistung zu erhöhen und ein Verdrecken des Werkzeuges durch das abgetragene Material ebenso zu verhindern, wie eine ungewollte Freisetzung der abgetragenen Materialpartikel in die Umwelt.

Zusätzlich oder alternativ erfolgt in Schritt c2) zudem das Beaufschlagen der aufgerauten Oberfläche mit einem ionisierten Gas. Ionisiertes Gas, welches beispielsweise in einem handelsüblichen Ionisator hergestellt werden kann, ist dem Fachmann bekannt. Ionisiertes Gas umfasst ionisierte Bestandteile, beispielsweise Sauerstoff-Ionen, die durch Ionisation von Molekülen erzeugt werden. Die im ionisierten Gas enthaltenen Ionen wechselwirken in Schritt c2) mit der aufgerauten Oberfläche und/oder dem abgetragenen Material. Je nach Prozessführung kann diese Wechselwirkung dazu führen, dass die aufgeraute Oberfläche bzw. das abgetragene Material elektrostatisch neutralisiert werden oder sich elektrostatisch positiv oder negativ aufladen. Beide Varianten erlauben überraschenderweise eine signifikant bessere Reinigung der aufgerauten Oberfläche von Reifenkomponenten, in dem sie entweder die elektrostatische Anziehung zwischen der aufgerauten Oberfläche und dem darauf liegenden abgetragenen Material durch Neutralisation aufheben, oder durch die gleichartige Aufladung der Oberfläche und des abgetragenen Materials sogar zu einer Abstoßung zwischen den Komponenten führen. In beiden Fällen ist die anschließende Entfernung des abgetragenen Materials, beispielsweise mit einem Luftstrom, signifikant erleichtert.

Es hat sich als besonderer Vorteil des erfindungsgemäßen Verfahrens erwiesen, dass dieses für eine Vielzahl an gummihaltigen Materialien und Reifenkomponenten einsetzbar ist, wobei sich jedoch die Vorbereitung von Laufstreifen bzw. von Altreifen mit einem zumindest teilweise abgetragenen, alten Laufstreifen als besonders relevante Anwendungsfälle erwiesen haben, die in dem erfindungsgemäßen Verfahren besonders effizient durchgeführt werden können. Bevorzugt ist daher ein erfindungsgemäßes Verfahren, wobei die Reifenkomponente ein Laufstreifen oder ein Altreifen mit einem zumindest teilweise abgetragenen, alten Laufstreifen, bevorzugt ein Laufstreifen ist.

Es wurde als Vorteil gefunden, dass das erfindungsgemäße Verfahren für eine Vielzahl von möglichen Oberflächendimensionen eingesetzt werden kann, wobei der Erfinder der vorliegenden Erfindung einen optimalen Breitenbereich identifizieren konnte, auf dem sich das erfindungsgemäße Verfahren besonders effizient einsetzen lässt und bei dem reproduzierbar eine gleichmäßige Reinigungsleistung erzielt werden kann. Bevorzugt ist insoweit ein erfindungsgemäßes Verfahren, wobei die Breite der Oberfläche der Reifenkomponente im Bereich von 100 mm bis 500 mm, bevorzugt im Bereich von 150 mm bis 450 mm, besonders bevorzugt im Bereich von 180 mm bis 400 mm, liegt.

Auch wenn das erfindungsgemäße Verfahren grundsätzlich auch auf Oberflächen mit lediglich teilweise vulkanisierten Kautschukmischungen eingesetzt werden kann, hat es sich als besonders vorteilhaft bei der Bearbeitung von vollständig vulkanisierten Kautschukmischungen erwiesen. Bevorzugt ist folglich ein erfindungsgemäßes Verfahren, wobei die Reifenkomponente ein vollständig vulkanisierte Kautschukmischung umfasst.

Es kann als besonderer Vorteil des erfindungsgemäßen Verfahrens gesehen werden, dass dieses insbesondere auf der Oberfläche von vulkanisierten Kautschukmischungen, die neben Styrol-Butadien-Kautschuk zudem einen Füllstoff umfassen, besonders gute Reinigungsleistung erbringt, da entsprechende Kautschukmischungen bei der Herstellung von modernen Hochleistungsreifen eine besondere Bedeutung haben. Bevorzugt ist demnach ein erfindungsgemäßes Verfahren, wobei die vulkanisierte Kautschukmischung durch Vulkanisation aus einer Kautschukmischung erhalten wurde, welche zumindest einen Styrol-Butadien-Kautschuk und zumindest einen Füllstoff umfasst.

Das erfindungsgemäße Verfahren resultiert immer dann in Reifenkomponenten, die für den späteren Einsatz in runderneuerten Reifen besonders optimiert sind, wenn die mittlere Rauheit der aufgerauten Oberfläche auf spezifische Werte eingestellt wird, die in einem vergleichsweise engen Wertebereich liegen. Bevorzugt ist vor diesem Hintergrund ein erfindungsgemäßes Verfahren, wobei die aufgeraute Oberfläche eine mittlere Rauheit Rₐ im Bereich von 10 µm bis 70 µm, bevorzugt im Bereich von 15 µm bis 45 µm, besonders bevorzugt im Bereich von 20 µm bis 30 µm, aufweist. Im Rahmen der vorliegenden Erfindung wird die mittlere Oberflächenrauheit Rₐ dabei bestimmt gemäß DIN EN ISO 4287:2010-07. Bevorzugt sind zusätzlich oder alternativ erfindungsgemäße Verfahren, wobei die aufgeraute Oberfläche einen flächenbezogenen Rauheitswert Sₐ, bestimmt gemäß EN ISO 25178, im Bereich von 10 µm bis 70 µm, bevorzugt im Bereich von 15 µm bis 45 µm, besonders bevorzugt im Bereich von 20 µm bis 30 µm, aufweist.

Es wurde festgestellt, dass es mit Blick auf die Verbundfestigkeit der mit den vorbereiteten Reifenkomponenten herzustellenden runderneuerten Reifen besonders zielführend ist, im erfindungsgemäßen Verfahren ein möglichst gleichmäßiges Rauheitsprofil zu erzeugen, um Gradienten in der Verbundfestigkeit zu vermeiden. Bevorzugt ist entsprechend ein erfindungsgemäßes Verfahren, wobei die aufgeraute Oberfläche eine gleichbleibende mittlere Rauheit Rₐ aufweist, die über die gesamte Oberfläche um höchstens 50 %, bevorzugt um höchstens 30 %, besonders bevorzugt um höchstens 10 % von der über die Oberfläche gemittelten mittlere Rauheit Rₐ abweicht.

Es hat sich gezeigt, dass nicht nur eine zu geringe Rauheit zu einer unzureichenden Verbundfestigkeit im runderneuerten Reifen führen kann, sondern dass auch eine zu hohe Rauheit nachteilig ist, da das aufgebrachte Haftmittel in die Vertiefungen des Rauheitsprofils hineinlaufen kann, sodass kein hinreichender Kontakt mit den zu verbindenden Reifenkomponente erhalten werden kann.

Die vorstehend diskutierte Problematik mit dem Einfließen des Haftmittels in besonders tiefe Ausnehmungen in der Oberfläche zeigt sich nach Einschätzung des Erfinders besonders bei makroskopischen Unebenheiten, deren Höhe bzw. Tiefe bestimmte Toleranzbereiche überschreiten und die zu ungewollten Schwachstellen im Verbund des runderneuerten Reifens führen können. Bevorzugt ist daher ein erfindungsgemäßes Verfahren, wobei die aufgeraute Oberfläche frei ist von makroskopischen Unebenheiten mit einer Höhe oder Tiefe von mehr als 800 µm, bevorzugt von mehr als 600 µm, besonders bevorzugt von mehr als 400 µm, bezogen auf die mittlere Höhe der Oberfläche.

Es hat sich als Vorteil des erfindungsgemäßen Verfahrens erwiesen, dass in Schritt c1) als Gas ein einfacher Luftstrom verwendet werden kann, wie er beispielsweise durch Einsatz von Druckluft erhalten werden kann. Bevorzugt ist gerade im Hinblick auf die Kosteneffizienz ein erfindungsgemäßes Verfahren, wobei der Gasstrom in Schritt c1) ein Luftstrom ist.

Es hat sich als zielführend erwiesen, den gemäß Schritt c1) erzeugten Gasstrom mit einem Gebläse zu erzeugen, wobei es besonders vorteilhaft ist, die Position der Absaugeinheit spezifisch an die Position des Gebläses anzupassen, sodass der vom Gebläse aufgewirbelte Schmutz effektiv abgesaugt werden kann. Bevorzugt ist damit ein erfindungsgemäßes Verfahren, wobei der Gasstrom in Schritt c1) mit einem Gebläse erzeugt wird, wobei das Gebläse und die Absaugeinheit vorzugsweise gegenüberliegend angeordnet sind, bevorzugt entlang der Förderrichtung oder der Rotationsrichtung der Oberfläche der Reifenkomponente relativ zu den Werkzeugen.

Eine alternative, nicht erfindungsgemäße Verfahrensführung des Verfahrens, die sich als besonders einfache und doch effektive Ausgestaltung erwiesen hat, ist die Führung des Gasstroms als sogenannter "cross-jet", d. h. als Luftstrom, welcher im Wesentlichen parallel zur Oberfläche der Reifenkomponente an der Reifenkomponente entlang streift. Bevorzugt ist somit ein erfindungsgemäßes Verfahren, wobei der Gasstrom in Schritt c1) als sogenannter "cross-jet" im Wesentlichen parallel zur Oberfläche der Reifenkomponente an der Reifenkomponente entlang strömt, bevorzugt entlang der Förderrichtung oder der Rotationsrichtung der Oberfläche der Reifenkomponente. Bevorzugt ist alternativ aber auch eine Ausgestaltung, wobei der Gasstrom mit einem Einfallswinkel im Bereich von 0° bis 15°, bevorzugt im Bereich von 0° bis 10°, besonders bevorzugt im Bereich von 0° bis 5°, auf die aufgeraute Oberfläche geführt wird.

Bevorzugt ist ein erfindungsgemäßes Verfahren, wobei der Gasstrom einen Volumenfluss im Bereich von 100 m³/h bis 200 m³/h aufweist.

Um einen möglichst effizienten Schutz der Umgebung vor den abgetragenen Materialpartikeln zu gewährleisten, hat es sich als besonders vorteilhaft erwiesen, die Absaugeinheit mit einem Filter auszurüsten. Bevorzugt ist somit ein erfindungsgemäßes Verfahren, wobei die Absaugeinheit einen Filter umfasst, insbesondere einen Schwebstofffilter.

Es hat sich als Vorteil des erfindungsgemäßen Verfahrens erwiesen, dass es sich auch bei dem ionisierten Gas um ionisierte Luft handeln kann, welche leicht und günstig verfügbar ist und durch einen Ionisator direkt am Ort des Verfahrens hergestellt werden kann. Bevorzugt ist also ein erfindungsgemäßes Verfahren, wobei das ionisierte Gas in Schritt c2) ionisierte Luft ist.

Es ist entsprechend bevorzugt, das ionisierte Gas mittels eines solchen Ionisators herzustellen, wobei der Ionisator bevorzugt durch Koronaentladung und Feldemission eine Ionisation bewirkt, was gegenüber dem Einsatz einer ionisierenden Strahlung große Vorteile hinsichtlich der sicheren Verfahrensführung aufweist. Bevorzugt ist entsprechend ein erfindungsgemäßes Verfahren, wobei das ionisierte Gas in Schritt c2) durch einen Ionisator, bevorzugt mittels Koronaentladung und Feldemission, bereitgestellt wird.

Um eine möglichst gleichmäßige Beaufschlagung der aufgerauten Oberfläche bzw. der darauf liegenden abgetragenen Materialpartikeln mit dem ionisierten Gas zu gewährleisten, hat es sich als vorteilhaft erwiesen, das Beaufschlagen mit einem vergleichsweise steilen Einfallswinkel auszuführen, was durch die Positionierung des Ionisators relativ zu der aufgerauten Oberfläche erfolgen kann. Bevorzugt ist folglich ein erfindungsgemäßes Verfahren, wobei das Beaufschlagen der aufgerauten Oberfläche mit dem ionisierten Gas in Schritt c2) mit einem Einfallswinkel im Bereich von 0° bis 45°, bevorzugt im Bereich von 0° bis 30°, besonders bevorzugt im Bereich von 0° bis 15°, erfolgt.

Grundsätzlich ist es möglich, die geladenen Ionen im ionisierten Gas durch die Wechselwirkung mit einem elektrischen oder magnetischen Feld zu beeinflussen, wobei positive und negative Elektronen in unterschiedlicher Weise beeinflusst werden. Dadurch ist es durch den Einsatz eines entsprechenden Feldes vorteilhafterweise möglich, die Zusammensetzung des eingesetzten ionisierten Gases zu beeinflussen und damit insbesondere Einfluss darauf zu nehmen, ob die aufgeraute Oberfläche und/oder das abgetragene Material elektrostatisch neutralisiert oder aufgeladen werden. Bevorzugt ist somit ein erfindungsgemäßes Verfahren, wobei die Zusammensetzung des auf die aufgeraute Oberfläche auftreffenden ionisierten Gases in Schritt c2) durch ein elektrisches oder magnetisches Feld gesteuert wird.

Auch wenn die vorstehend offenbarte einfache, nicht erfindungsgemäße Ausgestaltung des Gasstroms als "cross-jet" zu einer Reinigungsleistung führt, die für zahlreiche Anwendungen als ausreichend angesehen wird und sich insbesondere leicht und kosteneffizient in bestehende Apparaturen einbauen lässt, wird die vorstehend beschriebene Lösung für manche Aufgaben als nachteilig empfunden. Insbesondere wird die Reinigungsleistung in einigen Fällen nicht als ausreichend angesehen, gerade wenn es infolge einer hohen Oberflächenrauheit und/oder dem Vorhandensein von makroskopischen Strukturelementen zu Bereichen auf der Oberfläche kommt, in denen das Entfernen von abgetragenen Materialpartikeln unzureichend erfolgt, weil diese im Windschatten größerer Strukturen liegen. Zudem wird für einige Anwendungen, insbesondere für den Einsatz mit bestimmten Werkzeugen, vor allem beim Einsatz von Lasern, als nachteilig empfunden, dass ein eingesetzter, zumeist unidirektionaler Gasstrom das abgetragene Material nur in eine Richtung entfernt. Insbesondere für den Einsatz in Kombination mit einem Laser als Werkzeug, aber auch in Kombination mit anderen Werkzeugen wie beispielsweise Bürsten, hat es sich als ganz besonders bevorzugte Ausgestaltung der Erfindung erwiesen, den Gasstrom als rotierenden Gasstrom in der Form eines Wirbels auszuführen. Erfindungsgemäß ist vor diesem Hintergrund ein Verfahren, wobei der Gasstrom ein rotierender Gasstrom in der Form eines Wirbels ist.

In eigenen Versuchen hat sich gezeigt, dass der Einsatz turbulenterer Gasströmungen, insbesondere eines rotierenden Gasstroms, welcher an einen Tornado erinnert, zu einer besonders sauberen Reinigung der Oberfläche führt und, losgelöst vom verwendeten Werkzeug, überraschenderweise besonders gute Ergebnisse bei der Reinigung der bearbeiteten Gummimaterialien liefert. Der rotierende Gasstrom kann dabei vorteilhafterweise so ausgelegt werden, dass er um das Werkzeug herumgeführt wird, sodass das Werkzeug quasi im Inneren des Wirbels liegt. Dadurch wird abgetragenes Material durch den wirbelnden Gasstrom von der bearbeiteten Stelle weggeführt und gleichmäßig radial nach außen getragen, wo es von der Absaugeinheit besonders effizient aufgegriffen werden kann.

Es hat sich dabei als besonders vorteilhaft erwiesen, wenn der rotierende Gasstrom im Wesentlichen senkrecht auf die Oberfläche geführt wird, da dies die beste Reinigungsleistung ergibt. Bevorzugt ist also ein bevorzugtes erfindungsgemäßes Verfahren, wobei der rotierende Gasstrom mit einem Einfallswinkel im Bereich von 0° bis 15°, bevorzugt im Bereich von 0° bis 10°, besonders bevorzugt im Bereich von 0° bis 5°, auf die aufgeraute Oberfläche geführt wird.

Grundsätzlich bestehen für den Fachmann zahlreiche Möglichkeiten einen entsprechenden rotierenden Gasstrom zu erzeugen. Als besonders effiziente Möglichkeit hat sich jedoch eine Anordnung erwiesen, in der mehrere Luftauslassdüsen an einem Rotor befestigt werden, dessen Rotation zu einem entsprechenden verwirbelten Gasstrom führt. Alternativ ist es vorteilhaft, den Wirbel durch eine geschickte Führung des Gasstroms zu erreichen, bspw. indem der Gasstrom in einer Ringkammer geführt wird, die mit einer, zumeist leicht nach innen geneigten, Ringdüse versehen ist. Bevorzugt ist entsprechend ein bevorzugtes erfindungsgemäßes Verfahren, wobei der rotierende Gasstrom durch eine oder mehrere rotierende Luftauslassdüsen und/oder durch die Führung des Gasstroms durch eine mit einer Ringdüse versehene Ringkammer, erzeugt wird.

Die Aufhebung der elektrostatischen Wechselwirkung durch Neutralisation hat sich als verlässliche Methode erwiesen, ein ausgezeichnetes Reinigungsergebnis bereitzustellen, insbesondere wenn dies mit der Applikation eines Gasstroms durch ein Gebläse kombiniert wird. Denkbar ist für viele Anwendungen somit ein alternatives, nicht erfindungsgemäßes Verfahren, wobei in Schritt c2) die aufgeraute Oberfläche und/oder das abgetragene Material, bevorzugt die aufgeraute Oberfläche und das abgetragene Material, elektrostatisch neutralisiert werden.

In einer hierzu alternativen Ausführungsform hat es sich jedoch als besonders vorteilhaft erwiesen, die ausgeraute Oberfläche und das abgetragene Material elektrostatisch aufzuladen, um somit nicht nur anziehende Kräfte zu überwinden, sondern zusätzliche abstoßende Wechselwirkungen zu befördern. Bevorzugt ist folglich ein erfindungsgemäßes Verfahren, wobei in Schritt c2) die aufgeraute Oberfläche und das abgetragene Material elektrostatisch aufgeladen werden.

Als besonderer Vorteil hat sich bei einer derartigen Verfahrensgestaltung erwiesen, dass das Entfernen des abgetragenen Materials durch das Anlegen eines elektrischen Feldes, welches eine Kraft auf geladene Teilchen ausübt, bedingt oder unterstützt werden kann. Die Partikel werden dadurch von der aufgerauten Oberfläche angehoben und können anschließend beispielsweise mit einem Gasstrom kontrolliert abtransportiert werden. Erfindungsgemäß ist demnach ein Verfahren, wobei das Entfernen des abgetragenen Materials in Schritt c2) durch ein angelegtes elektrisches Feld bedingt oder unterstützt wird.

Auch wenn sich mit dem erfindungsgemäßen Verfahren vorteilhafterweise auch durch die isolierten Schritte c1) und c2) jeweils gute Reinigungsleistungen erzielen lassen und das erfindungsgemäße Verfahren somit hinsichtlich der apparativen Ausgestaltung eine große Flexibilität aufweist, ist es besonders bevorzugt, sowohl den Schritt c1) als auch den Schritt c2) einzusetzen, d. h. nicht nur eine elektrostatische Neutralisation bzw. Aufladung zu verursachen, sondern auch einen Gasstrom in Kombination mit einer Absaugeinheit einzusetzen. Bevorzugt ist folglich ein erfindungsgemäßes Verfahren, wobei das Entfernen des abgetragenen Materials in Schritt c) beide Schritte c1) und c2) umfasst.

Als ganz besonders bevorzugte Ausführungsform werden die Schritte c1) und c2) derart kombiniert, dass der Gasstrom gemäß Schritt c1) gleich das ionisierte Gas umfasst, welches gemäß Schritt c2) eingesetzt werden soll. Bevorzugt ist entsprechend ein bevorzugtes erfindungsgemäßes Verfahren, wobei der Gasstrom in Schritt c1) ionisiertes Gas umfasst, so dass die aufgeraute Oberfläche und/oder das abgetragene Material elektrostatisch neutralisiert oder elektrostatisch aufgeladen werden.

Mit Blick auf eine möglichst kosteneffiziente Verfahrensführung und einen größtmöglichen Durchsatz schlägt der Erfinder vor, das erfindungsgemäße Verfahren als kontinuierliches Verfahren zu betreiben, was insbesondere bei der Vorbereitung von Laufstreifen besonders leicht möglich ist. Bevorzugt ist ein erfindungsgemäßes Verfahren, wobei das Verfahren als kontinuierliches Verfahren betrieben wird, wobei die relative Geschwindigkeit der Oberfläche der Reifenkomponente zum Werkzeug bevorzugt im Bereich von 5 m/min bis 30 m/min, besonders bevorzugt im Bereich von 10 m/min bis 25 m/min liegt.

Grundsätzlich sind als Werkzeuge in dem erfindungsgemäßen Verfahren sämtliche dem Fachmann als geeignet bekannte Werkzeuge einsetzbar. Der Erfinder der vorliegenden Erfindung konnte jedoch ausgewählte Werkzeuge identifizieren, die sich besonders für den Einsatz im erfindungsgemäßen Verfahren eignen. Insbesondere der Einsatz von Lasern als Werkzeug hat zu besonders sauberen und genau strukturierten Oberflächen geführt, wohingegen der Einsatz von Bürsten eine besonders einfache und robuste Verfahrensführung erlaubt, insbesondere wenn segmentierte Drahtbürsten, d. h. Bürsten, die aus mehreren Segmenten bestehen, die einzeln ausgetauscht werden können, eingesetzt werden, da diese besonders leicht zu warten und zu reinigen sind. Bevorzugt ist somit ein erfindungsgemäßes Verfahren, wobei das Aufrauen der Oberfläche in Schritt b) mit einem oder mehreren Werkzeugen zum materialabtragenden Aufrauen erfolgt, die ausgewählt sind aus der Gruppe bestehend aus Lasern, insbesondere Lasergravierwerkzeugen, Fräswerkzeugen und Bürsten, bevorzugt ausgewählt sind aus der Gruppe bestehend aus Lasern, insbesondere Lasergravierwerkzeugen, und Drahtbürsten, insbesondere Drahtbürsten, wobei die Drahtbürsten vorzugsweise als segmentierte Drahtbürsten ausgeführt sind.

Insbesondere beim Einsatz von Bürsten kann es vorteilhaft sein, nicht lediglich ein Werkzeug einzusetzen, sondern eine Vielzahl von Werkzeugen einzusetzen, die zweckmäßigerweise hintereinander angeordnet werden, um zusammenwirkend die gewünschte Oberflächenrauheit zu erzeugen. Insbesondere bei der Serienanordnung von Bürsten können die hinteren Bürsten vorteilhafterweise so ausgelegt werden, dass sie zu einer groben Vorreinigung der aufgerauten Oberfläche von besonders großen Materialpartikeln beitragen. Dies kann dadurch erfolgen, dass die hinteren Bürsten aus weicheren Materialien, bspw. aus Kunststoffen, ausgebildet werden. Bevorzugt ist ein erfindungsgemäßes Verfahren, wobei das Aufrauen der Oberfläche in Schritt b) durch eine Vielzahl von hintereinander angeordneten Werkzeugen erfolgt.

Insbesondere bei der Realisierung des erfindungsgemäßen Verfahrens als kontinuierliches Verfahren hat es sich als vorteilhaft erwiesen, die Reifenkomponente relativ zu den Werkzeugen zu bewegen. Dies kann, insbesondere im Falle von Laufstreifen, durch eine Fördervorrichtung erfolgen, wohingegen die relative Bewegung eines Altreifens zielführenderweise durch eine Vorrichtung erfolgt, die den Altreifen um eine Achse rotieren kann. Alternativ können jedoch auch die Werkzeuge relativ zu einer fixierten Reifenkomponente bewegt werden, was nach Einschätzung des Erfinders bevorzugt durch einen Roboter, beispielsweise einen Roboterarm erfolgen sollte. Bevorzugt ist daher ein erfindungsgemäßes Verfahren, wobei der die Reifenkomponente im Verfahren auf einer Fördervorrichtung befördert oder in einer Vorrichtung um die eigene Achse herum rotiert wird, oder wobei das eine oder die mehreren Werkzeuge relativ zu der Reifenkomponente bewegt werden, bevorzugt durch einen Roboterarm.

Um zu einem möglichst guten Reinigungsergebnis und einer besonderen reproduzierbaren Oberflächenqualität zu gelangen, wird vorgeschlagen, zudem Sensoren vorzusehen, die die Belegung der aufgerauten Oberfläche mit abgetragenem Material bestimmten und die bearbeitete Reifenkomponente erst dann zur Weiterverarbeitung freizugeben, wenn die Oberflächenbelegung einen bestimmten Grenzwert unterschreitet. Bevorzugt ist demnach ein erfindungsgemäßes Verfahren, wobei der Gehalt an abgetragenem Material auf der aufgerauten Oberfläche der Reifenkomponente nach Schritt c) mittels eines Sensors bestimmt wird, wobei die Reifenkomponente bevorzugt erneut dem Schritt c) unterzogen wird, wenn der Gehalt an abgetragenem Material einen vorbestimmten Grenzwert übersteigt.

Vor allem mit Blick auf die Reproduzierbarkeit der Oberflächenqualität hat es sich als vorteilhaft erwiesen, die Schritte b) und/oder c) automatisiert auszuführen und dabei die Werkzeuge bzw. die in Schritt c) eingesetzten Komponenten durch Steuereinheiten zu steuern, die beispielsweise unter Einsatz eines neuronalen Netzwerkes trainiert werden können. Bevorzugt ist also ein erfindungsgemäßes Verfahren, wobei die Durchführung der Schritte b) und/oder c), bevorzugt der Schritte b) und c) automatisiert erfolgt und durch eine Steuereinheit gesteuert wird.

Wie vorstehend erläutert, ist das erfindungsgemäße Verfahren für die Vorbereitung von Laufstreifen besonders geeignet, so dass bevorzugte Verfahren zur Vorbereitung von Laufstreifen dienen.

Das erfindungsgemäße Verfahren unter bevorzugter Verwendung eines Laufstreifens als Reifenkomponenten hat sich dann als besonders vorteilhaft erwiesen, wenn der eingesetzte Laufstreifen weder zu dünn noch zu dick ist, da andernfalls eine Höhenanpassung nötig wäre. Bevorzugt ist insoweit ein bevorzugtes erfindungsgemäßes Verfahren, wobei die Reifenkomponente ein Laufstreifen mit einer Dicke im Bereich von 5 mm bis 40 mm, bevorzugt im Bereich von 10 mm bis 30 mm ist.

Es hat sich als besonders vorteilhaft erwiesen, den Laufstreifen als strangförmiges Halbzeug bereitzustellen, welches von einer Rolle abgerollt und in das erfindungsgemäße Verfahren eingespeist werden kann. Besonders vorteilhaft ist es, wenn dieser lange Materialstrang im Rahmen des erfindungsgemäßen Verfahrens mittels eines Trennwerkzeuges zu einzelnen Laufstreifen vereinzelt wird, die bereits die vorgesehene Länge für den späteren Einsatz auf runderneuerten Reifen aufweisen. Bevorzugt ist entsprechend ein bevorzugtes erfindungsgemäßes Verfahren, wobei der Laufstreifen in Schritt a) von einer Rolle als Materialstrang bereitgestellt wird, aus dem im Verfahren durch ein Trennwerkzeug einzelne Laufstreifen vereinzelt werden.

Um der Problematik von etwaigen Unebenheiten auf der Oberfläche des Laufstreifens zu begegnen, wird vorgeschlagen, die Schritte b) und/oder c) in Abhängigkeit der Dicke des Laufstreifens zu steuern, welche beispielsweise durch ein Höhen- und/oder Dickenmesser bestimmt werden kann. Hierdurch ist es möglich, beispielsweise die Werkzeuge relativ zu der Oberfläche des Laufstreifens anzuheben, wenn die Dicke des Laufstreifens lokal zunimmt, um eine gleichmäßige Druckapplikation und damit eine vergleichbare Aufrauhung zu gewährleisten. Entsprechend lässt sich hierdurch beispielsweise auch die Absaugeinheit und/oder das Gebläse relativ zur Oberfläche des behandelten Werkstücks stets in der gleichen Höhe anordnen. Bevorzugt ist vor diesem Hintergrund ein bevorzugtes erfindungsgemäßes Verfahren, wobei das Aufrauen der Oberfläche und/oder das Entfernen des abgetragenen Materials ortsaufgelöst in Abhängigkeit von der Dicke des Laufstreifens gesteuert wird, wobei die ortsaufgelöste Dicke des Laufstreifens bevorzugt durch einen Höhen- und/oder Dickenmesser, insbesondere einem Lichtschnittsensor, bestimmt wird.

Aus für den Fachmann offensichtlichen Gründen ist es besonders bevorzugt, das erfindungsgemäße Verfahren auf der Seite eines Laufstreifens auszuführen, die nicht das Profil umfasst und die für die spätere Verbindung mit dem vorbereiteten Altreifen vorgesehen ist. Es kann jedoch als besonderer Vorteil des erfindungsgemäßen Verfahrens gesehen werden, dass dieses in seiner Verfahrensführung so flexibel ist, dass die Schritte b) und c) prinzipiell auch gleichzeitig auf zumindest zwei Oberflächen des Laufstreifens durchgeführt werden können, beispielsweise auch an den Stirnseiten oder Flanken um nötigenfalls eine gute Verklebbarkeit mit anderen Komponenten im runderneuerten Reifen oder beim Ringschluss des Laufstreifens um den Altreifen zu gewährleisten. Bevorzugt ist somit ein bevorzugtes erfindungsgemäßes Verfahren, wobei der Laufstreifen auf einer Seite über ein Reifenprofil verfügt und wobei das Aufrauen ausschließlich auf der vom Reifenprofil gegenüberliegenden Oberfläche erfolgt. Bevorzugt ist alternativ ein bevorzugtes erfindungsgemäßes Verfahren, wobei die Schritte b) und c), bevorzugt gleichzeitig, auf zumindest zwei Oberflächen des Laufstreifens durchgeführt werden.

Anders als bei Altreifen, bei denen der alte Laufstreifen zumindest teilweise entfernt wurde und die unterhalb der auf der Karkassenoberfläche verbleibenden Gummischicht noch weitere Komponenten wie bspw. Stahlkorde umfassen, bestehen Laufstreifen zumeist im Wesentlichen aus einer vulkanisierten Kautschukmischung, wobei es insbesondere bevorzugt ist, wenn diese vollständig aus der vulkanisierten Kautschukmischung bestehen. Entsprechende Reifenkomponenten lassen sich mit dem erfindungsgemäßen Verfahren besonders effizient für die kalte Runderneuerung vorbereiten. Bevorzugt ist folglich auch ein bevorzugtes erfindungsgemäßes Verfahren, wobei der Laufstreifen aus der zumindest teilweise, bevorzugt vollständig, vulkanisierten Kautschukmischung besteht.

Um beim Vorbereiten von Laufstreifen im erfindungsgemäßen Verfahren eine besonders effiziente Verarbeitung zu ermöglichen und die aufrauende Wirkung der Werkzeuge zu unterstützen, ist es besonders vorteilhaft, die zum Transport der Laufstreifens verwendete Fördervorrichtung derart auszulegen, dass diese die Laufstreifen im Bereich der Werkzeuge aktiv gegen die zum Aufrauen eingesetzten Werkzeuge drücken kann, wobei die Kraft, mit der das Andrücken erfolgt, vorteilhafterweise durch eine Steuervorrichtung gesteuert werden kann, um die Oberflächenbeschaffenheit der Laufstreifen gezielt einstellen zu können. Bevorzugt ist entsprechend ein bevorzugtes erfindungsgemäßes Verfahren, wobei der Laufstreifen beim Aufrauen der Oberfläche in Schritt b) durch die Fördervorrichtung gegen das oder die zum Aufrauen eingesetzten Werkzeuge gedrückt wird.

Im Lichte der vorstehenden Ausführungen betrifft die Erfindung zudem ein Verfahren zur kalten Runderneuerung eines Reifens, umfassend die folgenden Verfahrensschritte:
d) Herstellen oder Bereitstellen eines Altreifens mit einem zumindest teilweise abgetragenen, alten Laufstreifen und einer aufgerauten Karkassenoberfläche, und
e) Befestigen eines Laufstreifens mit aufgerauter Oberfläche auf der aufgerauten Karkassenoberfläche mittels eines Haftmittels durch Erzeugung einer stoffschlüssigen Verbindung,
wobei der Laufstreifen mit aufgerauter Oberfläche mit dem erfindungsgemäßen Verfahren zur Vorbereitung von Reifenkomponenten hergestellt wird.

Der Vorteil des erfindungsgemäßen Verfahrens zur kalten Runderneuerung eines Reifens ist darin zu sehen, dass mit diesem runderneuerte Reifen erhalten werden können, bei denen der Verbund zwischen dem wiederverwerteten Altreifen und dem neu aufgebrachten Laufstreifen besonders fest und beständig ist. Dieser Vorteil äußert sich dann besonders deutlich, wenn das erfindungsgemäße Verfahren zur Vorbereitung von Reifenkomponenten nicht nur für den Laufstreifen, sondern auch für den aufbereiteten Altreifen eingesetzt wird, wobei in bevorzugten Ausgestaltungen sogar die Entfernung des alten Laufstreifens in einem erfindungsgemäßen Verfahren zur Vorbereitung von Reifenkomponenten erfolgen kann, d. h. unter Applikation des spezifischen Reinigungsschritts. Bevorzugt ist ein erfindungsgemäßes Verfahren zur kalten Runderneuerung eines Reifens, wobei die aufgeraute Karkassenoberfläche bevorzugt mit dem erfindungsgemäßen Verfahren zur Vorbereitung von Reifenkomponenten hergestellt wird. Bevorzugt ist ebenfalls ein erfindungsgemäßes Verfahren zur kalten Runderneuerung eines Reifens, wobei der Altreifen durch mechanisches Abtrennen eines Teils des alten Laufstreifens von der Karkasse des Reifens hergestellt wird, insbesondere durch Abschleifen des alten Laufstreifens, vorzugsweise in dem erfindungsgemäßen Verfahren zur Vorbereitung von Reifenkomponenten.

Die Verbindung des Laufstreifens mit dem vorbereiteten Altreifen erfolgt grundsätzlich in Übereinstimmung mit dem dem Fachmann bekannten Vorgehen. Hierbei konnten jedoch eine Klasse von Haftmitteln identifiziert werden, welche in der Praxis zu besonders festen Verbünden führen, insbesondere wenn dieses mit einer Vulkanisation in einem bestimmten Temperaturbereich kombiniert werden. Bevorzugt ist nämlich ein erfindungsgemäßes Verfahren zur kalten Runderneuerung eines Reifens, wobei das Haftmittel zumindest einen Styrol-Butadien-Kautschuk umfasst, wobei das Haftmittel vorzugsweise ein Lösungsmittel umfasst, welches beim Befestigen des vorbereiteten Laufstreifens auf der aufgerauten Karkassenoberfläche verdunstet. Bevorzugt ist darüber hinaus ein erfindungsgemäßes Verfahren zur kalten Runderneuerung eines Reifens, wobei die stoffschlüssige Verbindung durch eine Vulkanisation des Haftmittels erfolgt, wobei die Vulkanisation bevorzugt bei einer Temperatur im Bereich von 80 °C bis 150 °C, besonders bevorzugt bei einer Temperatur im Bereich von 100 °C bis 130 °C, erfolgt.

Die Erfindung betrifft auch eine Vorrichtung zur Vorbereitung von Reifenkomponenten für den Einsatz in der kalten Runderneuerung von Reifen in einem erfindungsgemäßen Verfahren, umfassend:
v) ein oder mehrere Werkzeuge zum materialabtragenden Aufrauen der Oberfläche der Reifenkomponente,
w) eine Vorrichtung zum Bewegen der Oberfläche der Reifenkomponente relativ zu dem einen oder den mehreren Werkzeugen, und
x) ein Gebläse zur Beaufschlagung der aufgerauten Oberfläche der Reifenkomponente mit einem Gasstrom,
dadurch gekennzeichnet, dass die Vorrichtung zusätzlich
y) eine Absaugeinheit zum Absaugen des Gases,
   und optional
z) einen Ionisator zum Ionisieren des Gases,
umfasst, wobei die Vorrichtung eine Arbeitskammer umfasst, wobei das oder die Werkzeuge so in der Arbeitskammer angeordnet sind, dass diese mit der Oberfläche der Reifenkomponente durch eine Öffnung der Arbeitskammer hindurch in Wechselwirkung treten können, wobei das eine oder mehrere Gebläse so in der Arbeitskammer angeordnet sind, dass im Inneren der Arbeitskammer ein turbulenter Gasstrom entsteht, der durch die Öffnung der Arbeitskammer hindurch auf die Reifenkomponente auftreffen kann.

Die erfindungsgemäße Vorrichtung ist auch deshalb als besonders vorteilhaft anzusehen, weil mit ihr das erfindungsgemäße Verfahren durchgeführt werden kann und sich somit die vorstehend beschriebenen Vorteile beim Einsatz der erfindungsgemäßen Vorrichtung ergeben. Bevorzugt sind solche erfindungsgemäßen Vorrichtungen, mit denen sich bevorzugte Ausführungsformen des erfindungsgemäßen Verfahrens realisieren lassen, wobei sich jeweils die vorstehend beschriebenen Vorteile ergeben.

Bevorzugt ist somit eine erfindungsgemäße Vorrichtung, wobei die Vorrichtung zum Bewegen eine Fördervorrichtung zum Befördern eines Laufstreifens durch die Vorrichtung oder eine Vorrichtung zum Rotieren eines Altreifens mit einem zumindest teilweise abgetragenen, alten Laufstreifen, bevorzugt eine Fördervorrichtung zum Befördern eines Laufstreifens durch die Vorrichtung ist.

Bevorzugt ist auch eine bevorzugte erfindungsgemäße Vorrichtung, wobei die Fördervorrichtung dazu eingerichtet ist, einen beförderten Laufstreifen gegen das eine oder die mehreren Werkzeuge zum materialabtragenden Aufrauen zu drücken.

Bevorzugt ist ebenfalls eine bevorzugte erfindungsgemäße Vorrichtung, wobei die Vorrichtung eine Aufnahmevorrichtung für eine Rolle umfasst, über die der Laufstreifen als Materialstrang bereitgestellt werden kann. Bevorzugt ist insoweit auch eine bevorzugte erfindungsgemäße Vorrichtung, wobei die Vorrichtung Trennwerkezuge zur Vereinzelung von Laufstreifen aus einem Materialstrang umfasst.

Bevorzugt ist zudem eine erfindungsgemäße Vorrichtung, wobei die Vorrichtung mehrere Werkzeuge zur materialabtragenden Aufrauen der Reifenkomponente umfasst, die vorzugsweise ausgewählt sind aus der Gruppe bestehend aus Lasern, insbesondere Lasergravierwerkzeugen, Fräswerkzeugen und Bürsten, bevorzugt ausgewählt sind aus der Gruppe bestehend aus Lasern, insbesondere Lasergravierwerkzeugen, und Drahtbürsten, insbesondere Drahtbürsten, wobei die Drahtbürsten vorzugsweise als segmentierte Drahtbürsten ausgeführt sind.

Bevorzugt ist entsprechend auch eine erfindungsgemäße Vorrichtung, wobei die Vorrichtung mehrere Werkzeuge zum materialabtragenden Aufrauen umfasst, die entlang der entlang der Förderrichtung oder der Rotationsrichtung angeordnet sind.

Bevorzugt ist darüber hinaus eine erfindungsgemäße Vorrichtung, wobei die Vorrichtung einen Gastank und/oder einen Anschluss an eine externe Gasleitung, insbesondere eine Druckluftleitung, umfasst.

Bevorzugt ist weiterhin eine erfindungsgemäße Vorrichtung, wobei das Gebläse und die Absaugeinheit gegenüberliegend angeordnet sind, bevorzugt entlang der Förderrichtung oder der Rotationsrichtung der Vorrichtung zum Bewegen.

Alternativ ist eine Vorrichtung, wobei das Gebläse so angeordnet ist, dass der Gasstrom als sogenannter "cross-jet" im Wesentlichen parallel zur Oberfläche einer in der Vorrichtung bearbeiteten Reifenkomponente strömt.

Bevorzugt ist vor allem eine erfindungsgemäße Vorrichtung, wobei das Gebläse eine oder mehrere rotierende Luftauslassdüsen und/oder eine mit einer Ringdüse versehene Ringkammer umfasst, wobei das Gebläse vorzugsweise so angeordnet ist, dass der Gasstrom mit einem Einfallswinkel im Bereich von 0° bis 15°, bevorzugt im Bereich von 0° bis 10°, besonders bevorzugt im Bereich von 0° bis 5°, auf die Oberfläche einer in der Vorrichtung bearbeiteten Reifenkomponente auftrifft.

Bevorzugt ist zudem eine erfindungsgemäße Vorrichtung, wobei die Absaugeinheit einen Filter umfasst, insbesondere einen Schwebstofffilter.

Bevorzugt ist auch eine erfindungsgemäße Vorrichtung, wobei der Ionisator ionisiertes Gas mittels Koronaentladung und Feldemission erzeugen kann, wobei der Ionisator bevorzugt so ausgelegt ist, dass die Zusammensetzung des ionisierten Gases durch ein elektrisches Feld gesteuert werden kann.

Bevorzugt ist ebenfalls eine erfindungsgemäße Vorrichtung, wobei das Gebläse dazu eingerichtet ist, die aufgeraute Oberfläche der Reifenkomponente mit vom Ionisator bereitgestelltem ionisierten Gas zu beaufschlagen.

Bevorzugt ist zudem eine erfindungsgemäße Vorrichtung, wobei die Vorrichtung zusätzlich einen Sensor zur Bestimmung des Gehalts an verbleibendem abgetragenem Material auf der aufgerauten Oberfläche der Reifenkomponente und/oder zur Bestimmung der Rauheit der aufgerauten Oberfläche der Reifenkomponente umfasst.

Bevorzugt ist insbesondere auch eine erfindungsgemäße Vorrichtung, wobei die Vorrichtung zusätzlich einen Höhen- und/oder Dickenmesser zur ortsaufgelösten Bestimmung der Dicke eines Laufstreifens, insbesondere einen Lichtschnittsensor, umfasst.

Bevorzugt ist gleichfalls eine erfindungsgemäße Vorrichtung, wobei die Vorrichtung zusätzlich eine Steuereinheit zur automatische Steuerung der Werkzeuge zum materialabtragenden Aufrauen und/oder des Gebläses umfasst.

Bevorzugt ist dabei auch eine erfindungsgemäße Vorrichtung, wobei die Vorrichtung dazu eingerichtet ist, dass das materialabtragende Aufrauen und das anschließende Entfernen des abgetragenen Materials von der aufgerauten Oberfläche des Laufstreifens zeitgleich auf zwei oder mehr Oberflächen des Laufstreifens erfolgen kann.

Erfindungsgemäß ist eine Vorrichtung, wobei die Vorrichtung eine Arbeitskammer umfasst, wobei das oder die Werkzeuge so in der Arbeitskammer angeordnet sind, dass diese mit der Oberfläche der Reifenkomponente durch eine Öffnung der Arbeitskammer hindurch in Wechselwirkung treten können, wobei das eine oder mehrere Gebläse so in der Arbeitskammer angeordnet sind, dass im Inneren der Arbeitskammer ein turbulenter Gasstrom entsteht, der durch die Öffnung der Arbeitskammer hindurch auf die Reifenkomponente auftreffen kann. Bevorzugt ist dabei ganz besonders eine bevorzugte erfindungsgemäße Vorrichtung, wobei die Arbeitskammer zudem den Ionisator zum Ionisieren des in der Kammer befindlichen Gases umfasst, und/oder wobei die Arbeitskammer zudem eine Absaugeinheit zum Absaugen des Gasstroms umfasst, und/oder wobei die Arbeitskammer im Bereich der Öffnung deformierbare Dichtelemente umfasst, die dazu eigereichtet sind, beim Kontakt mit der Oberfläche der Reifenkomponente einen Austritt des Gasstroms durch die Öffnung hindurch zu verhindern oder zu reduzieren.

Die Erfindung betrifft abschließend auch die Verwendung eines ionisierten Gases bei der Reinigung der aufgerauten Oberfläche einer Reifenkomponente, insbesondere eines Laufstreifens, umfassend eine zumindest teilweise vulkanisierte Kautschukmischung, von abgetragenem Material, wobei die aufgeraute Oberfläche der Reifenkomponente mit dem ionisierten Gas beaufschlagt wird, um die aufgeraute Oberfläche und/oder das abgetragene Material, bevorzugt das abgetragene Material, elektrostatisch aufzuladen, wobei die Reinigung durch ein angelegtes elektrisches Feld bedingt oder unterstützt wird.

Der Erfinder der vorliegenden Erfindung hat erkannt, dass ein ionisiertes Gas überraschenderweise bei der Reinigung von aufgerauten Oberflächen bei Reifenkomponenten, d. h. gummihaltigen Komponenten, eingesetzt werden kann. Hierbei wird das ionisierte Gas jedoch nicht bzw. nicht vorwiegend zur Neutralisation von etwaigen elektrostatischen Aufladungen der aufgerauten Oberfläche und/oder des abgetragenen Materials verwendet, sondern im Gegenteil so ausgelegt, beispielsweise durch den Einsatz geeigneter elektrischer Felder, dass es im Bereich der aufgerauten Oberfläche und/oder des abgetragenen Materials zu einer elektrostatischen Aufladung kommt, die zu einer abstoßenden Wechselwirkung zwischen den aufgeladenen Elementen führt. Es hat sich gezeigt, dass die Reinigung der aufgerauten Oberfläche weiter dadurch bewirkt werden kann, dass ein elektrisches Feld angelegt wird, um das elektrostatisch aufgeladene, abgetragene Material zumindest teilweise von der Oberfläche abzuheben. Bei dieser Verwendung hat es sich als besonders vorteilhaft erwiesen, wenn zudem ein Gasstrom verwendet wird, um das derart von der Oberfläche abgehobene, abgetragene Material zu entfernen.

Nachfolgend werden bevorzugte Ausführungsformen der Erfindung unter Bezugnahme auf die beiliegenden Zeichnungen näher erläutert und beschrieben. Dabei zeigt:
- Fig. 1: eine schematische Darstellung einer erfindungsgemäßen Vorrichtung bei der Durchführung des erfindungsgemäßen Verfahrens in einer bevorzugten Ausführungsform auf einem Laufstreifen; und
- Fig. 2: eine schematische Darstellung einer erfindungsgemäßen Vorrichtung bei der Durchführung des erfindungsgemäßen Verfahrens in einer bevorzugten Ausführungsform auf einem zumindest teilweise von einem alten Laufstreifen befreiten Altreifen.

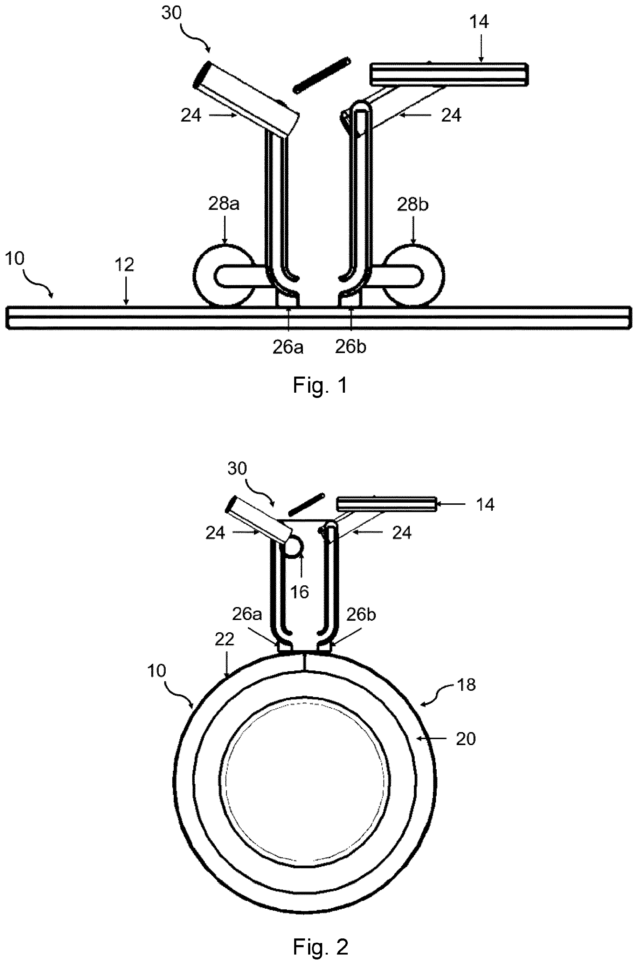

Die Fig. 1 und 2 zeigen jeweils eine schematische Darstellung einer erfindungsgemäßen Vorrichtung 30 bei der Durchführung des erfindungsgemäßen Verfahrens in einer bevorzugten Ausführungsform.

Fig. 1 stellt dabei den Einsatz der Vorrichtung 30 auf einem Laufstreifen dar, wohingegen die Reifenkomponente 10 in Fig. 2 ein Altreifen 18 ist, dessen alter Laufstreifen 20 von der Karkassenoberfläche 22 so weit entfernt wurde, dass an der Karkassenoberfläche 22 eine aufgeraute Kunststoffoberfläche verbleibt.

Gezeigt ist in beiden Fällen eine Vorrichtung 30 zur Vorbereitung von Reifenkomponenten 10 für den Einsatz in der kalten Runderneuerung von Reifen.

Die Vorrichtung 30 umfasst jeweils ein Werkzeug 14 zum materialabtragenden Aufrauen der Oberfläche 12 der Reifenkomponente 10, wobei es sich bei dem Werkzeug 14 jeweils um einen Laser handelt, welcher über einen in der Vorrichtung 30 abgebrachten Spiegel abgelenkt werden kann.

In Fig. 1 wird die Reifenkomponente 10 bzw. deren Oberfläche 12 durch ein Förderband relativ zu dem Werkzeug 14 bewegt, wobei das Förderband in Fig. 1 jedoch nicht dargestellt ist. In Fig. 2 erfolgt die relative Bewegung der Reifenkomponente 10 durch einen Elektromotor, der die Aufhängung und damit den darauf angeordneten Altreifen 18 um dessen Achse rotieren lässt. Die Vorrichtung 30 umfasst jeweils zwei Gebläse 24, die so angeordnet sind, dass sich im Inneren der Arbeitskammer ein turbulenter Luftstrom ergibt. In der Rückwand der Arbeitskammer umfasst die Vorrichtung 30 eine Absaugeinheit 16 zum Absaugen des Gases, die jedoch nur in Fig. 2 schematisch gezeigt ist. Die Vorrichtungen 30 der Fig. 1 und 2 weisen zudem einen Ionisator zum Ionisieren des in der Arbeitskammer befindlichen Gases auf, der in den schematischen Zeichnungen jedoch nicht gezeigt ist.

In den in Fig. 1 und 2 dargestellten Ausführungsformen setzt die Arbeitskammer nicht unmittelbar auf der Oberfläche 12 der zu bearbeitenden Reifenkomponente 10 auf, sondern ist mit dieser über deformierbare Dichtelemente 26a, 26b in Kontakt, die einen dichten Schluss mit der Oberfläche 12 ermöglichen, sodass der im Inneren der Arbeitskammer geführte Gasstrom im Wesentlichen nur durch die Absaugeinheit 16 aus der Arbeitskammer austreten kann.

Die in Fig. 1 gezeigte Ausführungsform weist darüber hinaus zwei Leitrollen 28a, 28b auf, die die Führung der Vorrichtung 30 im gleichmäßigen Abstand über die Oberfläche 12 der Reifenkomponente 10 erlauben.

Mit den in Fig. 1 und 2 dargestellten Vorrichtungen 30 können Reifenkomponenten 10 gemäß dem erfindungsgemäßen Verfahren vorbereitet werden. Hierzu wird die bereitgestellte Reifenkomponente 10, welche eine zumindest teilweise vulkanisierte Kautschukmischung umfasst, durch Abtragen von Material mit dem Werkzeug 14 an seiner Oberfläche 12 aufgeraut. Das derart abgetragene Material wird von der aufgerauten Oberfläche 12 dadurch entfernt, dass die aufgeraute Oberfläche 12 mit einem ionisierten Gas beaufschlagt wird, welches in den dargestellten Ausführungsformen so erfolgt, dass die aufgeraute Oberfläche 12 und das abgetragene Material elektrostatische neutralisiert werden. Zudem wird die Oberfläche 12 mit einem Gasstrom beaufschlagt, wobei der mit abgetragenem Material angereicherte Gasstrom mit der Absaugeinheit abgesaugt wird.

### Bezugszeichenliste

- 10: Reifenkomponente
- 12: Oberfläche
- 14: Werkzeug
- 16: Absaugeinheit
- 18: Altreifen
- 20: alter Laufstreifen
- 22: Karkassenoberfläche
- 24: Gebläse
- 26a, 26b: deformierbare Dichtelemente
- 28a, 28b: Leitrollen
- 30: Vorrichtung

## Patentansprüche

1. Verfahren zur Vorbereitung von Reifenkomponenten (10), insbesondere von Laufstreifen, für den Einsatz in der kalten Runderneuerung von Reifen, umfassend die folgenden Verfahrensschritte:
a) Herstellen oder Bereitstellen einer Reifenkomponente (10), umfassend eine zumindest teilweise vulkanisierte Kautschukmischung,
b) Aufrauen einer Oberfläche (12) der Reifenkomponente durch Abtragen von Material mit einem oder mehreren Werkzeugen (14), und
c) Entfernen des abgetragenen Materials von der aufgerauten Oberfläche (12) der Reifenkomponente (10),
**dadurch gekennzeichnet, dass** das Entfernen des abgetragenen Materials in Schritt c) zumindest einen der folgenden Schritte umfasst:
c1) Beaufschlagen der aufgerauten Oberfläche (12) mit einem Gasstrom und Absaugen des mit abgetragenen Material angereicherten Gases mit einer Absaugeinheit (16), wobei der Gasstrom ein rotierender Gasstrom in der Form eines Wirbels ist,
und/oder
c2) Beaufschlagen der aufgerauten Oberfläche (12) mit einem ionisierten Gas, so dass das abgetragene Material elektrostatisch aufgeladen wird, wobei das Entfernen des abgetragenen Materials in Schritt c2) durch ein angelegtes elektrisches Feld bedingt oder unterstützt wird, um das elektrostatisch aufgeladene, abgetragene Material zumindest teilweise von der Oberfläche abzuheben.

2. Verfahren nach Anspruch 1, wobei die aufgeraute Oberfläche (12) eine mittlere Rauheit Rₐ im Bereich von 10 µm bis 70 µm, bevorzugt im Bereich von 15 µm bis 45 µm, besonders bevorzugt im Bereich von 20 µm bis 30 µm, aufweist.

3. Verfahren nach einem der Ansprüche 1 oder 2, wobei in Schritt c2) die aufgeraute Oberfläche (12) und das abgetragene Material elektrostatisch aufgeladen werden.

4. Verfahren nach einem der Ansprüche 1 bis 3, wobei das Entfernen des abgetragenen Materials in Schritt c) beide Schritte c1) und c2) umfasst.

5. Verfahren nach einem der Ansprüche 1 bis 4, wobei das Verfahren als kontinuierliches Verfahren betrieben wird, wobei die relative Geschwindigkeit der Oberfläche (12) der Reifenkomponente (10) zum Werkzeug (14) bevorzugt im Bereich von 5 m/min bis 30 m/min, bevorzugt im Bereich von 10 m/min bis 25 m/min liegt.

6. Verfahren zur kalten Runderneuerung eines Reifens, umfassend die folgenden Verfahrensschritte:
d) Herstellen oder Bereitstellen eines Altreifens (18) mit einem zumindest teilweise abgetragenen, alten Laufstreifen (20) und einer aufgerauten Karkassenoberfläche (22), und
e) Befestigen eines Laufstreifens mit aufgerauter Oberfläche (12) auf der aufgerauten Karkassenoberfläche (22) mittels eines Haftmittels durch Erzeugung einer stoffschlüssigen Verbindung,
wobei der Laufstreifen mit aufgerauter Oberfläche (12) mit dem Verfahren zur Vorbereitung von Reifenkomponenten (10) nach einem der Ansprüche 1 bis 5 hergestellt wird.

7. Vorrichtung (30) zur Vorbereitung von Reifenkomponenten (10) für den Einsatz in der kalten Runderneuerung von Reifen in einem Verfahren nach einem der Ansprüche 1 bis 6 umfassend:
v) ein oder mehrere Werkzeuge (14) zum materialabtragenden Aufrauen der Oberfläche (12) der Reifenkomponente (10),
w) eine Vorrichtung zum Bewegen der Oberfläche (12) der Reifenkomponente (10) relativ zu dem einen oder den mehreren Werkzeugen (14), und
x1) ein Gebläse (24) zur Beaufschlagung der aufgerauten Oberfläche (12) der Reifenkomponente (10) mit einem Gasstrom,
**dadurch gekennzeichnet, dass**
x2) der Gasstrom ein rotierender Gasstrom in der Form eines Wirbels ist,
dass die Vorrichtung zusätzlich
y) eine Absaugeinheit (16) zum Absaugen des Gases,
und optional
z) einen Ionisator zum Ionisieren des Gases,
umfasst, wobei die Vorrichtung eine Arbeitskammer umfasst, wobei das oder die Werkzeuge so in der Arbeitskammer angeordnet sind, dass diese mit der Oberfläche der Reifenkomponente durch eine Öffnung der Arbeitskammer hindurch in Wechselwirkung treten können, wobei das eine oder mehrere Gebläse so in der Arbeitskammer angeordnet sind, dass im Inneren der Arbeitskammer ein turbulenter Gasstrom entsteht, der durch die Öffnung der Arbeitskammer hindurch auf die Reifenkomponente auftreffen kann.

## Claims

1. Method for preparing tyre components (10), in particular treads, for use in the cold retreading of tyres, comprising the following method steps:
a) producing or providing a tyre component (10) comprising an at least partially vulcanized rubber mixture,
b) roughening a surface (12) of the tyre component by removing material using one or more tools (14), and
c) clearing the removed material from the roughened surface (12) of the tyre component (10),
**characterized in that** the clearing of the removed material in step c) comprises at least one of the following steps:
c1) subjecting the roughened surface (12) to a gas flow and extracting the gas, enriched with removed material, by suction using a suction-extraction unit (16), wherein the gas flow is a rotating gas flow in the form of a vortex,
and/or
c2) subjecting the roughened surface (12) to an ionized gas, such that the removed material is electrostatically charged, wherein the clearing of the removed material in step c2) is caused or assisted by an applied electric field, in order to lift the electrostatically charged, removed material at least partially from the surface.

2. Method according to Claim 1, wherein the roughened surface (12) has an average roughness Rₐ in the range from 10 µm to 70 µm, preferably in the range from 15 µm to 45 µm, particularly preferably in the range from 20 µm to 30 µm.

3. Method according to either of Claims 1 and 2, wherein in step c2) the roughened surface (12) and the removed material are electrostatically charged.

4. Method according to any one of Claims 1 to 3, wherein the clearing of the removed material in step c) comprises both steps c1) and c2).

5. Method according to any one of Claims 1 to 4, wherein the method is operated as a continuous method, wherein the relative speed of the surface (12) of the tyre component (10) to the tool (14) is preferably in the range from 5 m/min to 30 m/min, preferably in the range from 10 m/min to 25 m/min.

6. Method for the cold retreading of a tyre, comprising the following method steps:
d) producing or providing a used tyre (18) having an at least partially worn, old tread (20) and a roughened carcass surface (22), and
e) fastening a tread with a roughened surface (12) to the roughened carcass surface (22) by means of an adhesive, by creating a materially bonded connection, wherein the tread with a roughened surface (12) is produced by the method for preparing tyre components (10) according to any one of Claims 1 to 5.

7. Apparatus (30) for preparing tyre components (10) for use in the cold retreading of tyres, in a method according to any one of Claims 1 to 6, comprising:
v) one or more tools (14) for roughening the surface (12) of the tyre component (10) by removal of material,
w) a device for moving the surface (12) of the tyre component (10) relative to the one or more tools (14), and
x1) a blower (24) for subjecting the roughened surface (12) of the tyre component (10) to a gas flow, **characterized in that**
x2) the gas flow is a rotating gas flow in the form of a vortex, **in that** the apparatus additionally comprises
y) a suction-extraction unit (16) for extracting the gas,
and optionally
z) an ionizer for ionizing the gas,
wherein the apparatus comprises a work chamber, wherein the one or more tools are arranged in the work chamber such that they can interact with the surface of the tyre component through an opening of the work chamber, wherein the one or more blowers are arranged in the work chamber such that, in the interior of the work chamber, a turbulent gas flow arises which can act on the tyre component through the opening of the work chamber.

## Revendications

1. Procédé de préparation de composants de pneus (10), notamment de bandes de roulement, pour une utilisation dans le rechapage à froid de pneus, comprenant les étapes de procédé suivantes :
a) la fabrication ou la fourniture d'un composant de pneu (10), comprenant un mélange de caoutchouc au moins partiellement vulcanisé,
b) la rugosification d'une surface (12) du composant de pneu par enlèvement de matière avec un ou plusieurs outils (14), et
c) l'élimination de la matière enlevée de la surface rugosifiée (12) du composant de pneu (10),
**caractérisé en ce que** l'élimination de la matière enlevée à l'étape c) comprend au moins l'une des étapes suivantes :
c1) la sollicitation de la surface rugosifiée (12) avec un courant de gaz et l'aspiration du gaz enrichi en matière enlevée avec une unité d'aspiration (16), le courant de gaz étant un courant de gaz rotatif sous la forme d'un tourbillon,
et/ou
c2) la sollicitation de la surface rugosifiée (12) avec un gaz ionisé, de telle sorte que la matière enlevée soit chargée électrostatiquement, l'élimination de la matière enlevée à l'étape c2) étant causée ou assistée par un champ électrique appliqué afin de soulever au moins partiellement la matière enlevée chargée électrostatiquement de la surface.

2. Procédé selon la revendication 1, dans lequel la surface rugosifiée (12) présente une rugosité moyenne Rₐ dans la plage allant de 10 µm à 70 µm, de préférence dans la plage allant de 15 µm à 45 µm, de manière particulièrement préférée dans la plage allant de 20 µm à 30 µm.

3. Procédé selon l'une quelconque des revendications 1 ou 2, dans lequel, à l'étape c2), la surface rugosifiée (12) et la matière enlevée sont chargées électrostatiquement.

4. Procédé selon l'une quelconque des revendications 1 à 3, dans lequel l'élimination de la matière enlevée à l'étape c) comprend les deux étapes c1) et c2).

5. Procédé selon l'une quelconque des revendications 1 à 4, dans lequel le procédé est mis en oeuvre sous forme de procédé continu, la vitesse relative de la surface (12) du composant de pneu (10) par rapport à l'outil (14) se situant de préférence dans la plage allant de 5 m/min à 30 m/min, de préférence dans la plage allant de 10 m/min à 25 m/min.

6. Procédé de rechapage à froid d'un pneu, comprenant les étapes de procédé suivantes :
d) la fabrication ou la fourniture d'un pneu usagé (18) ayant une bande de roulement usagée (20) au moins partiellement usée et une surface de carcasse (22) rugosifiée, et
e) la fixation d'une bande de roulement à surface rugosifiée (12) sur la surface de carcasse rugosifiée (22) au moyen d'un agent adhésif en créant une liaison par matière,
la bande de roulement à surface rugosifiée (12) étant fabriquée par le procédé de préparation de composants de pneu (10) selon l'une quelconque des revendications 1 à 5.

7. Dispositif (30) pour la préparation de composants de pneus (10) pour une utilisation dans le rechapage à froid de pneus dans un procédé selon l'une quelconque des revendications 1 à 6, comprenant :
v) un ou plusieurs outils (14) pour rugosifier la surface (12) du composant de pneu (10) par enlèvement de matière,
w) un dispositif pour déplacer la surface (12) du composant de pneu (10) par rapport aux un ou plusieurs outils (14), et
x1) un ventilateur (24) pour solliciter la surface rugosifiée (12) du composant de pneu (10) avec un courant de gaz, **caractérisé en ce que**
x2) le courant de gaz est un courant de gaz rotatif sous la forme d'un tourbillon, **en ce que** le dispositif comprend en outre
y) une unité d'aspiration (16) pour aspirer le gaz,
et en option
z) un ionisateur pour ioniser le gaz,
le dispositif comprenant une chambre de travail, le ou les outils étant agencés dans la chambre de travail de manière à pouvoir interagir avec la surface du composant de pneu à travers une ouverture de la chambre de travail, les un ou plusieurs ventilateurs étant agencés dans la chambre de travail de manière à créer un courant de gaz turbulent à l'intérieur de la chambre de travail, qui peut percuter le composant de pneu à travers l'ouverture de la chambre de travail.
